# EUROPÄISCHE PATENTANMELDUNG

(11) **EP 4 498 288 A1**
(43) Veröffentlichungstag der Anmeldung: **29.01.2025**
(21) Anmeldenummer: 23188053.5
(22) Anmeldetag: 27.07.2023
(51) Int. Cl.: G06N 3/098, G06N 3/0455, G05B 23/02

(54) **DETEKTION VON TECHNISCHEN ZUSTÄNDEN ODER TECHNISCHEN BESCHAFFENHEITEN**

(71) Anmelder: Siemens Aktiengesellschaft, 80333 München (DE)
(72) Erfinder: SCHALL, Daniel, 2020 Hollabrunn (AT)
(74) Vertreter: Siemens Patent Attorneys

(57) **Zusammenfassung**

Die Erfindung betrifft eine Detektion von technischen Zuständen oder technischen Beschaffenheiten, wobei zumindest ein erstes Modell (4) künstlicher Intelligenz und ein zweites Modell (5) künstlicher Intelligenz trainiert werden, wobei zumindest aus ersten Trainingsergebnissen betreffend das erste Modell (4) und aus zweiten Trainingsergebnissen betreffend das zweite Modell (5) ein föderales drittes Modell (6) künstlicher Intelligenz gebildet wird.

Es wird vorgeschlagen, dass zumindest mittels des ersten Modells (4) und mittels des dritten Modells (6) zumindest ein technischer erster Zustand oder zumindest eine technische erste Beschaffenheit detektiert wird, wobei mittels des ersten Modells (4) zumindest ein erstes Detektionsergebnis gebildet wird und mittels des dritten Modells (6) zumindest ein erstes Kontroll-Detektionsergebnis gebildet wird, und wobei ein erster Detektionsfehler dann detektiert wird, wenn zumindest das erste Detektionsergebnis und das erste Kontroll-Detektionsergebnis einander widersprechen.

Dadurch wird eine Redundanz bei der Detektion von Zuständen oder Beschaffenheiten erzielt.

## Beschreibung

Die Erfindung betrifft ein computerimplementiertes Verfahren zur Detektion von technischen Zuständen oder technischen Beschaffenheiten sowie ein Datenverarbeitungssystem, wobei zumindest ein in einer ersten Recheneinheit des Datenverarbeitungssystems implementiertes erstes Modell künstlicher Intelligenz und ein in einer mit der ersten Recheneinheit signalübertragend verbundenen zweiten Recheneinheit des Datenverarbeitungssystems implementiertes zweites Modell künstlicher Intelligenz auf Grundlage von technische Zustände oder technische Beschaffenheiten repräsentierenden Trainingsdaten trainiert werden, wobei in dem Datenverarbeitungssystem zumindest aus ersten Trainingsergebnissen betreffend das erste Modell künstlicher Intelligenz und aus zweiten Trainingsergebnissen betreffend das zweite Modell künstlicher Intelligenz ein föderales drittes Modell künstlicher Intelligenz gebildet wird.

Bei zahlreichen technischen Anwendungen, wie beispielsweise bei visuellen Qualitätskontrollen, ist eine sichere Erkennung von Anomalien, Fehlern und/oder Schäden von großer Bedeutung. Werden für derartige Anwendungen Verfahren auf Basis von Modellen künstlicher Intelligenz eingesetzt, so können fehlerhafte Detektions- und/oder Klassifikationsergebnisse dazu führen, dass mittels dieser Modelle, wenn sie auf Basis dieser fehlerhaften Detektions- und/oder Klassifikationsergebnisse trainiert werden und dies unerkannt bleibt, unpräzise oder fehlerhafte Ergebnisse gebildet werden.

Aus dem Stand der Technik ist beispielsweise die WO 2022/225506 A1 bekannt, welche ein Verfahren zur Detektion von Fehlern von Fahrwerken zeigt, wobei ein Autoencoder mit ersten Beschleunigungsdaten eines ersten Fahrwerks eines ersten Schienenfahrzeugs trainiert wird. Zweite Beschleunigungsdaten werden während eines Betriebs eines zweiten Fahrwerks eines zweiten Schienenfahrzeugs erfasst und von dem Autoencoder empfangen. Mittels des auf Basis der ersten Beschleunigungsdaten trainierten Autoencoder und der von dem Autoencoder empfangenen zweiten Beschleunigungsdaten können Fehler des zweiten Fahrwerks detektiert werden.

Weiterhin beschreibt die WO 2023/117775 A1 ein Verfahren und eine Einrichtung zur automatisierten Inspektion von Fahrwerken für Schienenfahrzeuge. An einem Fahrwerk wird ein Prüfabschnitt definiert, welcher mittels einer Kamera erfasst wird. Ein Ist-Kamerabildinhalt betreffend den Prüfabschnitt wird mit einem Soll-Kamerabildinhalt betreffend den Prüfabschnitt verglichen. Eine Warnung wird dann gebildet, wenn der Ist-Kamerabildinhalt von dem Soll-Kamerabildinhalt abweicht und dies mittels einer Methode maschinellen Lernens als Fehler bewertet wird.

Der Erfindung liegt die Aufgabe zugrunde, ein gegenüber dem Stand der Technik weiterentwickeltes, redundantes Inspektionsverfahren anzugeben.

Erfindungsgemäß wird diese Aufgabe gelöst mit einem Verfahren nach Anspruch 1, bei dem zumindest mittels des ersten Modells künstlicher Intelligenz und mittels des dritten Modells künstlicher Intelligenz zumindest ein technischer erster Zustand oder zumindest eine technische erste Beschaffenheit detektiert wird, wobei mittels des ersten Modells künstlicher Intelligenz zumindest ein erstes Detektionsergebnis gebildet wird und mittels des dritten Modells künstlicher Intelligenz zumindest ein erstes Kontroll-Detektionsergebnis gebildet wird, und wobei ein erster Detektionsfehler dann detektiert wird, wenn zumindest das erste Detektionsergebnis und das erste Kontroll-Detektionsergebnis einander widersprechen. Durch diese Maßnahme werden mittels der ersten Recheneinheit und der zweiten Recheneinheit automatisierte Inspektionsvorgänge ermöglicht, wobei das erste Detektionsergebnis mittels des ersten Kontroll-Detektionsergebnisses geprüft wird.

Dadurch wird eine hohe Sicherheit bei einer Detektion von Anomalien, Fehlern und/oder Schäden erzielt. Eine aufwendige Kontrolle eines Detektionsschritts (z.B. unter Anwendung eines vier Augen - Prinzips) kann vermieden werden.

Das erfindungsgemäße Verfahren kann beispielsweise zur automatisierten Inspektion technischer Vorrichtungen (z.B. von Maschinen, Fahrzeugen, Flugzeugen, Maschinenelementen, Geräten, Apparaten etc.) eingesetzt werden, wobei die technischen Vorrichtungen beispielsweise über Auswertung von Bildern der technischen Vorrichtungen mittels Bildverarbeitung inspiziert werden können. Es ist auch möglich, mittels des erfindungsgemäßen Verfahrens z.B. medizinische Bilder (z.B. Röntgenbilder) automatisiert zu inspizieren und so Anomalien zu detektieren etc.

Weitere vorteilhafte Ausgestaltungen des erfindungsgemäßen Verfahrens ergeben sich aus den Unteransprüchen.

Maschinenbauliche und/oder elektrotechnische Anwendungsgebiete etc. können mit dem erfindungsgemäßen Verfahren erschlossen werden, wenn zumindest der technische erste Zustand oder zumindest die technische erste Beschaffenheit eine mechanische, elektrische und/oder elektronische Qualitätseigenschaft zumindest einer technischen Vorrichtung betrifft, wobei die zumindest eine technische Vorrichtung zur Bildung zumindest des ersten Detektionsergebnisses und des ersten Kontroll-Detektionsergebnisses automatisiert inspiziert wird.

Sind zu detektierende Sachverhalte beispielsweise in Bilddaten verarbeitet, so kann es zur automatisierten Inspektion hilfreich sein, wenn Daten betreffend zumindest den technischen ersten Zustand oder zumindest die technische erste Beschaffenheit in zumindest einem Signal codiert sind, welches zumindest ein Bild repräsentiert und welches zur Bildung zumindest des ersten Detektionsergebnisses und des ersten Kontroll-Detektionsergebnisses ausgewertet wird.

Für eine automatisierte Inspektion auf Grundlage von Bildern kann es ferner günstig sein, wenn zumindest der technische erste Zustand oder zumindest die technische erste Beschaffenheit zumindest ein Zustand oder zumindest eine Beschaffenheit zumindest eines Signals ist, welches zumindest ein Bild repräsentiert und welches zur Bildung zumindest des ersten Detektionsergebnisses und des ersten Kontroll-Detektionsergebnisses ausgewertet wird.

Durch diese Maßnahme können beispielsweise Unterschiede in Bildern anhand von voneinander abweichenden Signalparametern erkannt werden. Beispielsweise können durch Auswertung von Signalparametern, welche hell-dunkel-Unterschiede in Bildern repräsentieren, Inhalte medizinischer Röntgenbilder miteinander verglichen und Anomalien erkannt werden.

Eine Bezeichnung des ersten Detektionsergebnisses wird erreicht, wenn einem Datensatz, welchen das erste Detektionsergebnis betrifft, das erste Detektionsergebnis als Label zugeordnet wird.

Durch diese Maßnahme wird eine automatisierte Verarbeitung des ersten Detektionsergebnisses vereinfacht. Eine wiederholte und somit rechnerressourcenaufwendige Bildung des ersten Detektionsergebnisses wird vermieden.

Detektionsergebnisse können z.B. anhand von ihnen zugeordneten Labeln miteinander verglichen werden. Fehlerhafte Detektionsergebnisse können beispielsweise anhand von Labeln erkannt und durch Änderung von Labeln korrigiert werden.

Dadurch wird ferner eine Verarbeitung von Detektionsergebnissen z.B. in Datenbanken vereinfacht.

Eine Komplexitätsreduktion eines künstlichen neuronalen Netzes durch Komprimierung von Eingangsinformationen wird ermöglicht, wenn zumindest das erste Modell künstlicher Intelligenz ein Autoencoder ist.

Eine automatisierte Qualitätssicherung von hoher Effektivität und Effizienz wird erzielt, wenn zumindest das erste Detektionsergebnis und das erste Kontroll-Detektionsergebnis zur visuellen Qualitätskontrolle zumindest einer technischen Vorrichtung gebildet werden.

Eine automatisierte Bewertung des technischen ersten Zustands oder der technischen ersten Beschaffenheit wird ermöglicht, wenn mittels zumindest eines in der ersten Recheneinheit implementierten ersten Klassifikationsmodells zumindest der technische erste Zustand oder zumindest die technische erste Beschaffenheit klassifiziert wird.

Eine vorteilhafte Lösung wird erzielt, wenn in dem Datenverarbeitungssystem auf Grundlage zumindest des ersten Klassifikationsmodells und eines in der zweiten Recheneinheit implementierten zweiten Klassifikationsmodells ein föderales drittes Klassifikationsmodell gebildet wird, von welchem eine erste Klassifikationsmodellinstanz in der ersten Recheneinheit gebildet wird und eine zweite Klassifikationsmodellinstanz in der zweiten Recheneinheit gebildet wird.

Durch diese Maßnahme werden eine Zusammenführung von lokalen Datensätzen und deren Übertragung in eine zentrale Recheneinheit vermieden. Bewertungsergebnisse im Hinblick auf den technischen ersten Zustand oder die technische erste Beschaffenheit werden durch Föderalisierung in ihrer Qualität verbessert.

Ein Training des ersten Klassifikationsmodells auf Grundlage des ersten Detektionsergebnisses und eines mittels eines vierten Modells künstlicher Intelligenz gebildeten zweiten Detektionsergebnisses wird ermöglicht, wenn das in der ersten Recheneinheit implementierte vierte Modell künstlicher Intelligenz und ein in der zweiten Recheneinheit implementiertes fünftes Modell künstlicher Intelligenz auf Grundlage von technische Zustände oder technische Beschaffenheiten repräsentierenden Trainingsdaten trainiert werden, wobei das föderale dritte Modell künstlicher Intelligenz aus den ersten Trainingsergebnissen und den zweiten Trainingsergebnissen sowie aus dritten Trainingsergebnissen betreffend das vierte Modell künstlicher Intelligenz und vierten Trainingsergebnissen betreffend das fünfte Modell künstlicher Intelligenz gebildet wird, wobei zumindest mittels des vierten Modells künstlicher Intelligenz und mittels des dritten Modells künstlicher Intelligenz zumindest ein technischer zweiter Zustand oder zumindest eine technische zweite Beschaffenheit detektiert wird, wobei mittels des vierten Modells künstlicher Intelligenz zumindest das zweite Detektionsergebnis gebildet wird und mittels des dritten Modells künstlicher Intelligenz zumindest ein zweites Kontroll-Detektionsergebnis gebildet wird, und wobei ein zweiter Detektionsfehler dann detektiert wird, wenn zumindest das zweite Detektionsergebnis und das zweite Kontroll-Detektionsergebnis einander widersprechen.

Im Hinblick auf eine rechtzeitige Erkennung eines fehlgeleiteten Trainingsvorgangs des ersten Klassifikationsmodells ist es hilfreich, wenn zumindest das erste Klassifikationsmodell zur Unterscheidung zumindest des technischen ersten Zustands von dem technischen zweiten Zustand oder zumindest der technischen ersten Beschaffenheit von der technischen zweiten Beschaffenheit auf Grundlage zumindest des ersten Detektionsergebnisses und des zweiten Detektionsergebnisses trainiert wird, wobei ein erster Trainingsvorgang des ersten Klassifikationsmodells zur Detektion anomaler oder fehlerhafter erster Trainingseingaben in das erste Klassifikationsmodell betreffend zumindest das erste Detektionsergebnis und das zweite Detektionsergebnis mittels des dritten Modells künstlicher Intelligenz auf Grundlage zumindest des ersten Kontroll-Detektionsergebnisses und des zweiten Kontroll-Detektionsergebnisses überwacht wird.

Durch diese Maßnahme wird eine Registrierung, Löschung und/oder Korrektur der anomalen oder fehlerhaften ersten Trainingseingaben ermöglicht.

Günstig ist es, wenn eine erste Modellinstanz des dritten Modells künstlicher Intelligenz in der ersten Recheneinheit gebildet wird und eine zweite Modellinstanz des dritten Modells künstlicher Intelligenz in der zweiten Recheneinheit gebildet wird, wobei die zweiten Trainingsergebnisse von der zweiten Recheneinheit in die erste Recheneinheit übertragen werden.

Dadurch werden eine Zusammenführung von lokalen Datensätzen und deren Übertragung in eine zentrale Recheneinheit vermieden. Zur Bildung des föderalen dritten Modells können sich die erste Recheneinheit und die zweite Recheneinheit selbst koordinieren.

Ein erfolgversprechendes Anwendungsgebiet für das erfindungsgemäße Verfahren wird mit einem

Datenverarbeitungssystem, umfassend Mittel zur Ausführung des erfindungsgemäßen Verfahrens, erschlossen.

Die Mittel umfassen die erste Recheneinheit und die zweite Recheneinheit.

Nachfolgend wird die Erfindung anhand von Ausführungsbeispielen näher erläutert.

Es zeigen beispielhaft:
- Fig. 1:: Ein Flussdiagramm zu einer beispielhaften Ausführungsvariante eines erfindungsgemäßen computerimplementierten Verfahrens zur Detektion von technischen Zuständen oder technischen Beschaffenheiten,
- Fig. 2:: Eine schematische Darstellung einer beispielhaften ersten Ausführungsvariante eines erfindungsgemäßen Datenverarbeitungssystems mit einer ersten Recheneinheit und einer zweiten Recheneinheit, und
- Fig. 3:: Eine schematische Darstellung einer beispielhaften zweiten Ausführungsvariante eines erfindungsgemäßen Datenverarbeitungssystems mit einer ersten Recheneinheit, einer zweiten Recheneinheit und einer dritten Recheneinheit.

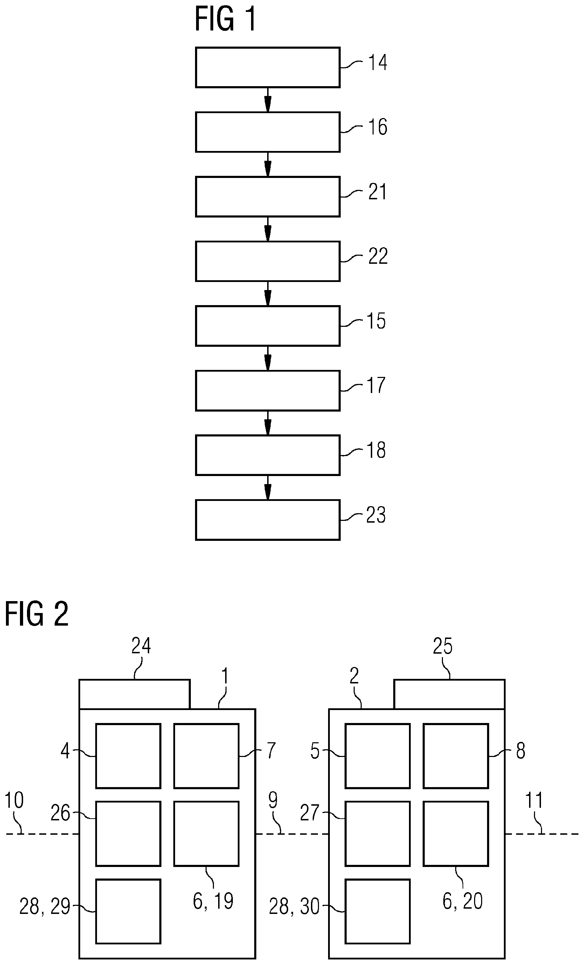

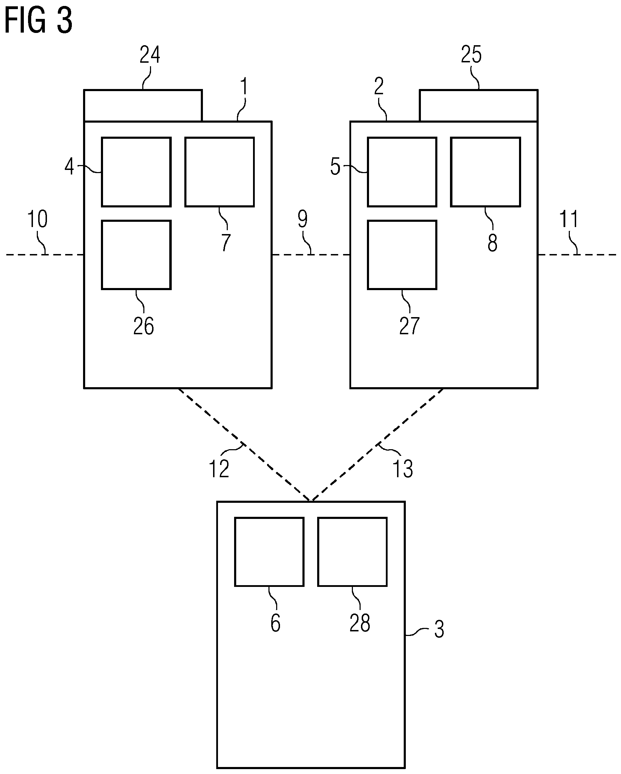

Fig. 1 zeigt ein Flussdiagramm zu einer beispielhaften Ausführungsvariante eines erfindungsgemäßen computerimplementierten Verfahrens zur Detektion von technischen Zuständen oder technischen Beschaffenheiten, wobei ein in einer ersten Recheneinheit 1 eines Datenverarbeitungssystems, wie es beispielhaft in Fig. 2 und Fig. 3 dargestellt ist, implementiertes erstes Modell 4 künstlicher Intelligenz und ein in einer über eine erste Signalleitung 9 mit der ersten Recheneinheit 1 signalübertragend verbundenen zweiten Recheneinheit 2 des Datenverarbeitungssystems implementiertes zweites Modell 5 künstlicher Intelligenz auf Grundlage von technische Beschaffenheiten repräsentierenden Trainingsdaten trainiert werden (erster Modelltrainingsschritt 14), welche zu einem dritten Modell 6 künstlicher Intelligenz föderalisiert werden (erster Föderalisierungsschritt 16). Weiterhin werden in dem ersten Modelltrainingsschritt 14 auch ein in der ersten Recheneinheit 1 implementiertes viertes Modell 7 künstlicher Intelligenz und ein in der zweiten Recheneinheit 2 implementiertes fünftes Modell 8 künstlicher Intelligenz auf Grundlage der technische Beschaffenheiten repräsentierenden Trainingsdaten trainiert, wobei das vierte Modell 7 und das fünfte Modell 8 ebenfalls in den ersten Föderalisierungsschritt 16 einbezogen werden.

Das erste Modell 4, das zweite Modell 5, das dritte Modell 6, das vierte Modell 7 und das fünfte Modell 8 sind beispielhaft in Fig. 2 und Fig. 3 gezeigt.

Die Trainingsdaten werden mittels Durchführung einer digitalen Bildanalyse gebildet, wobei in der Bildverarbeitung digitale Bilder, welche als Fahrzeugkarosserien ausgebildete technische Vorrichtungen mit und ohne Schäden zeigen, automatisiert analysiert werden. Die Bilder sind mit digitalen Labels versehen, welche schadhafte und fehlerfreie technische Beschaffenheiten angeben. Auf Basis dieser Bilder lernen das erste Modell 4, das zweite Modell 5, das dritte Modell 6, das vierte Modell 7 und das fünfte Modell 8 Fahrzeugkarosserien als schadhaft zu erkennen. Die in dem ersten Modelltrainingsschritt 14 eingesetzten digitalen Bilder zeigen verschiedene Fehler, zwischen welchen mittels eines Klassifikationsschritts 18 unterschieden werden kann. Das erste Modell 4 und das zweite Modell 5 werden auf Grundlage von ersten Bildern trainiert, welche Kratzer in Fahrzeugkarosserien zeigen. Das vierte Modell 7 und das fünfte Modell 8 werden auf Grundlage von zweiten Bildern trainiert, welche Durchrisse in Fahrzeugkarosserien zeigen. Mittels des Klassifikationsschritts 18 können Kratzer von Durchrissen in Fahrzeugkarosserien unterschieden werden.

Erfindungsgemäß ist es auch möglich, die Trainingsdaten auf Basis von Messungen an technischen Vorrichtungen, welche anomale oder fehlerhafte und fehlerfreie technische Zustände der Vorrichtungen erkennbar machen (z.B. einen fehlerhaften Zustand einer Reibungsbremse, in welchem eine maximal zulässige Temperatur der Reibungsbremse überschritten ist, etc.), zu bilden, wodurch technische Zustände detektiert werden können.

Die digitalen Bilder zur Bildung der Trainingsdaten werden, aus externen Datenquellen, über eine zweite Signalleitung 10, wie sie beispielhaft in Fig. 2 und Fig. 3 gezeigt ist, in die erste Recheneinheit 1 und über eine dritte Signalleitung 11, wie sie beispielhaft in Fig. 2 und Fig. 3 dargestellt ist, in die zweite Recheneinheit 2 eingespeist.

In dem Datenverarbeitungssystem wird dann in dem ersten Föderalisierungsschritt 16 aus ersten Trainingsergebnissen betreffend das erste Modell 4, aus zweiten Trainingsergebnissen betreffend das zweite Modell 5, aus dritten Trainingsergebnissen betreffend das vierte Modell 7 und vierten Trainingsergebnissen betreffend das fünfte Modell 8 das föderale drittes Modell 6 gebildet. Hierbei wird eine erste Modellinstanz 19 des dritten Modells 6, wie sie beispielhaft in Fig. 2 gezeigt ist, in der ersten Recheneinheit 1 gebildet und wird eine zweite Modellinstanz 20 des dritten Modells 6, wie sie beispielhaft in Fig. 2 dargestellt ist, in der zweiten Recheneinheit 2 gebildet, wobei die ersten Trainingsergebnisse und die dritten Trainingsergebnisse von der ersten Recheneinheit 1 in die zweite Recheneinheit 2 übertragen werden und die zweiten Trainingsergebnisse und die vierten Trainingsergebnisse von der zweiten Recheneinheit 2 in die erste Recheneinheit 1 übertragen werden.

Die ersten Trainingsergebnisse und die zweiten Trainingsergebnisse beziehen sich auf eine technische erste Beschaffenheit, die dritten Trainingsergebnisse und die vierten Trainingsergebnisse beziehen sich auf eine technische zweite Beschaffenheit. Das dritte Modell 6 umfasst ein erstes Modul und ein zweites Modul, wobei das erste Modul aus den ersten Trainingsergebnissen und den zweiten Trainingsergebnissen gebildet wird und das zweite Modul aus den dritten Trainingsergebnissen und den vierten Trainingsergebnissen gebildet wird. Instanzen des ersten Moduls und des zweiten Moduls werden in der ersten Modellinstanz 19 und in der zweiten Modellinstanz 20 gebildet.

Bei dem ersten Föderalisierungsschritt 16 handelt es sich um einen Vorgang föderalen maschinellen Lernens, bei welchem das erste Modell 4, das zweite Modell 5, das vierte Modell 7 und das fünfte Modell 8 jeweils mit lokalen Datensätzen trainiert werden, ohne dass Eingangsdaten für den ersten Modelltrainingsschritt 14 ausgetauscht werden. Es werden vielmehr die ersten Trainingsergebnisse, die zweiten Trainingsergebnisse, die dritten Trainingsergebnisse und die vierten Trainingsergebnisse in Form von aktualisierten Modellparametern zwischen der ersten Recheneinheit 1 und der zweiten Recheneinheit 2 in regelmäßigen Intervallen ausgetauscht. Es handelt sich um einen dezentralisierten Ansatz föderalen Lernens, bei welchem sich die erste Recheneinheit 1 und die zweite Recheneinheit 2 selbst koordinieren.

Das erste Modell 4, das zweite Modell 5, das erste Modul des dritten Modells 6, das zweite Modul des dritten Modells 6, das vierte Modell 7 und das fünfte Modell 8 sind als Autoencoder ausgebildet, wobei es sich um künstliche neuronale Netze handelt. Mittels der Autoencoder werden komprimierte Repräsentationen für Bilddaten betreffend die Fahrzeugkarosserien gelernt (Encoding). Parameter, welche anomale oder fehlerhafte Beschaffenheiten der Fahrzeugkarosserien (z.B. Kratzer oder Durchrisse) charakterisieren, werden extrahiert. Die Autoencoder umfassen jeweils drei Schichten, nämlich eine Eingabeschicht, eine Encoding-Schicht und eine Ausgabeschicht.

Die Eingabeschicht umfasst erste Neuronen, welche einen Bilddatensatz beschreiben. Mittels der Encoding-Schicht wird eine komprimierte Repräsentation des Bilddatensatzes gebildet. Die Ausgabeschicht umfasst zweite Neuronen, welche eine Rekonstruktion der ersten Neuronen darstellen und die Bedeutung der ersten Neuronen haben.

Mittels der Autoencoder werden fehlerfreie sowie fehler- oder schadhafte Beschaffenheiten der Fahrzeugkarosserien anhand von Bilddaten gelernt und schließlich, auf Grundlage von Trainingsergebnissen, Abweichungen von fehlerfreien Beschaffenheiten der Fahrzeugkarossieren detektiert.

Mittels des ersten Modells 4 und mittels des ersten Moduls des dritten Modells 6 wird dann anhand eines ersten Detektionsbilddatensatzes die technische erste Beschaffenheit detektiert (Detektionsschritt 21), wobei mittels des ersten Modells 4 ein erstes Detektionsergebnis gebildet wird und mittels des ersten Moduls des dritten Modells 6 ein erstes Kontroll-Detektionsergebnis gebildet wird.

Das erste Detektionsergebnis und das erste Kontroll-Detektionsergebnis werden miteinander verglichen. Ein erster Detektionsfehler wird dann detektiert, wenn das erste Detektionsergebnis und das erste Kontroll-Detektionsergebnis einander widersprechen (erster Kontrollschritt 22). Der erste Detektionsfehler wird detektiert, wenn beispielsweise das erste Detektionsergebnis eine fehlerfreie Karosserieoberfläche indiziert, das erste Kontroll-Detektionsergebnis aber eine Beschädigung anzeigt.

In dem Detektionsschritt 21 wird ferner mittels des vierten Modells 7 und mittels des zweiten Moduls des dritten Modells 6 anhand eines zweiten Detektionsbilddatensatzes die technische zweite Beschaffenheit detektiert, wobei mittels des vierten Modells 7 ein zweites Detektionsergebnis gebildet wird und mittels des zweiten Moduls des dritten Modells 6 ein zweites Kontroll-Detektionsergebnis gebildet wird. Das zweite Detektionsergebnis und das zweite Kontroll-Detektionsergebnis werden miteinander verglichen. Ein zweiter Detektionsfehler wird in dem ersten Kontrollschritt 22 dann detektiert, wenn das zweite Detektionsergebnis und das zweite Kontroll-Detektionsergebnis einander widersprechen.

In dem Detektionsschritt 21 wird weiterhin mittels des zweiten Modells 5 und des ersten Moduls des dritten Modells 6 anhand eines dritten Detektionsbilddatensatzes die technische erste Beschaffenheit detektiert, wobei mittels des zweiten Modells 5 ein drittes Detektionsergebnis gebildet wird und mittels des ersten Moduls des dritten Modells 6 ein drittes Kontroll-Detektionsergebnis gebildet wird. Das dritte Detektionsergebnis und das dritte Kontroll-Detektionsergebnis werden miteinander verglichen. Ein dritter Detektionsfehler wird in dem ersten Kontrollschritt 22 dann detektiert, wenn das dritte Detektionsergebnis und das dritte Kontroll-Detektionsergebnis einander widersprechen.

In dem Detektionsschritt 21 wird darüber hinaus mittels des fünften Modells 8 und mittels des zweiten Moduls des dritten Modells 6 anhand eines vierten Detektionsbilddatensatzes die technische zweite Beschaffenheit detektiert, wobei mittels des fünften Modells 8 ein viertes Detektionsergebnis gebildet wird und mittels des zweiten Moduls des dritten Modells 6 ein viertes Kontroll-Detektionsergebnis gebildet wird. Das vierte Detektionsergebnis und das vierte Kontroll-Detektionsergebnis werden miteinander verglichen. Ein vierter Detektionsfehler wird in dem ersten Kontrollschritt 22 dann detektiert, wenn das vierte Detektionsergebnis und das vierte Kontroll-Detektionsergebnis einander widersprechen.

Das erste Detektionsergebnis, das zweite Detektionsergebnis, das dritte Detektionsergebnis, das vierte Detektionsergebnis, das erste Kontroll-Detektionsergebnis, das zweite Kontroll-Detektionsergebnis, das dritte Kontroll-Detektionsergebnis und das vierte Kontroll-Detektionsergebnis werden zur visuellen Qualitätskontrolle von Fahrzeugkarosserien, d.h. von technischen Vorrichtungen, in einer Fahrzeugfertigungseinrichtung gebildet. Es können damit Karosserieschäden automatisiert detektiert werden.

Das erste Detektionsergebnis, das zweite Detektionsergebnis, das dritte Detektionsergebnis, das vierte Detektionsergebnis, das erste Kontroll-Detektionsergebnis, das zweite Kontroll-Detektionsergebnis, das dritte Kontroll-Detektionsergebnis, das vierte Kontroll-Detektionsergebnis sowie gegebenenfalls der erste Detektionsfehler, der zweite Detektionsfehler, der dritte Detektionsfehler oder/und der vierte Detektionsfehler werden über eine mit der ersten Recheneinheit 1 verbundene erste Ausgabeeinheit 24, wie sie beispielhaft in Fig. 2 und Fig. 3 gezeigt ist, und eine mit der zweiten Recheneinheit 2 verbundene zweite Ausgabeeinheit 25, wie sie beispielhaft in Fig. 2 und Fig. 3 dargestellt ist, ausgegeben.

Mittels des Detektionsschritts 21 werden die technische erste Beschaffenheit und die technische zweite Beschaffenheit detektiert, bei welchen es sich um Beschädigungen von Fahrzeugkarosserien handelt. Mittels des Detektionsschritts 21 ist die technische erste Beschaffenheit nicht von der technischen zweiten Beschaffenheit unterscheidbar, es ist lediglich feststellbar, dass eine Beschädigung vorliegt (da das erste Modell 4 sowie das zweite Modell 5 nur auf Basis der ersten Bilder, welche Kratzer zeigen, trainiert werden und da das vierte Modell 7 sowie das fünfte Modell 8 nur auf Basis der zweiten Bilder, welche Durchrisse zeigen, trainiert werden). Eine Unterscheidung zwischen der technischen ersten Beschaffenheit und der technischen zweiten Beschaffenheit (zwischen Kratzern und Durchrissen) wird erst über den Klassifikationsschritt 18 ermöglicht.

Erfindungsgemäß ist es jedoch auch vorstellbar, dass der Detektionsschritt 21 und der Klassifikationsschritt 18 beispielsweise zu einem einzigen Verfahrensschritt zusammengefasst sind, wozu das erste Modell 4, das zweite Modell 5, das dritte Modell 6, das vierte Modell 7 und das fünfte Modell 8 z.B. Klassifikationsmodule, die beispielsweise als Support-Vector-Maschinen oder als Bayes-Klassifikatoren etc. ausgebildet sein können, umfassen können.

Erfindungsgemäß ist es ferner denkbar, dass der Detektionsschritt 21 und der Klassifikationsschritt 18 z.B. auf einen technischen ersten Zustand und einen technischen zweiten Zustand abstellen, wobei beispielsweise mittels des Detektionsschritts 21 ein Zustand detektiert wird, bei dem eine Reibungsbremse eine maximal zulässige Temperatur überschreitet und mittels des Klassifikationsschritts 18 z.B. anhand einer Zeitdauer einer Überschreitung der maximal zulässigen Temperatur durch die Reibungsbremse eine Kritikalität der Überschreitung klassifiziert wird, wobei der technische erste Zustand beispielsweise eine unkritische Maximaltemperaturüberschreitung sein kann und der technische zweite Zustand eine kritische Maximaltemperaturüberschreitung sein kann, etc.

Erfindungsgemäß ist es darüber hinaus auch vorstellbar, dass das dritte Modell 6 in einer über eine vierte Signalleitung 12, wie sie beispielhaft in Fig. 3 gezeigt ist, mit der ersten Recheneinheit 1 und über eine fünfte Signalleitung 13, wie sie beispielhaft in Fig. 3 gezeigt ist, mit der zweiten Recheneinheit 2 signalübertragend verbundenen dritten Recheneinheit 3 des Datenverarbeitungssystems, wie sie beispielhaft in Fig. 3 dargestellt ist, gebildet wird, wobei die ersten Trainingsergebnisse und die dritten Trainingsergebnisse aus der ersten Recheneinheit 1 und die zweiten Trainingsergebnisse und die vierten Trainingsergebnisse aus der zweiten Recheneinheit 2 in die dritte Recheneinheit 3 übertragen werden. Die dritte Recheneinheit 3 kann, in einem alternativen, zentralisierten Ansatz föderalen Lernens, dazu genutzt werden, Lernschritte in der ersten Recheneinheit 1 und der zweiten Recheneinheit 2 zu koordinieren. Das erste Kontroll-Detektionsergebnis, das zweite Kontroll-Detektionsergebnis, das dritte Kontroll-Detektionsergebnis und das vierte Kontroll-Detektionsergebnis des dritten Modells 6 können von der dritten Recheneinheit 3 in die erste Recheneinheit 1 und in die zweite Recheneinheit 2 übertragen werden.

Bei der technischen ersten Beschaffenheit und der technischen zweiten Beschaffenheit handelt es sich um mechanische Qualitätseigenschaften von Fahrzeugkarosserien, wobei die Fahrzeugkarosserien zur Bildung des ersten Detektionsergebnisses, des zweiten Detektionsergebnisses, des dritten Detektionsergebnisses, des vierten Detektionsergebnisses, des ersten Kontroll-Detektionsergebnisses, des zweiten Kontroll-Detektionsergebnisses, des dritten Kontroll-Detektionsergebnisses und des vierten Kontroll-Detektionsergebnisses automatisiert anhand von an den Fahrzeugkarosserien mittels digitaler Kameras gebildeten Detektionsbilddaten umfassend den ersten Detektionsbilddatensatz, den zweiten Detektionsbilddatensatz, den dritten Detektionsbilddatensatz und den vierten Detektionsbilddatensatz inspiziert werden.

Diese Detektionsbilddaten betreffend die technische erste Beschaffenheit und die technische zweite Beschaffenheit sind in Signalen codiert, welche digitale Detektionsbilder repräsentieren und welche zur Bildung des ersten Detektionsergebnisses, des zweiten Detektionsergebnisses, des dritten Detektionsergebnisses, des vierten Detektionsergebnisses, des ersten Kontroll-Detektionsergebnisses, des zweiten Kontroll-Detektionsergebnisses, des dritten Kontroll-Detektionsergebnisses und des vierten Kontroll-Detektionsergebnisses ausgewertet werden.

Erfindungsgemäß ist es auch denkbar, dass der technische erste Zustand oder die technische erste Beschaffenheit ein Zustand oder eine Beschaffenheit eines Signals oder eines Signalmusters ist, welches ein Bild repräsentiert und welches zur Bildung des ersten Detektionsergebnisses und des ersten Kontroll-Detektionsergebnisses ausgewertet wird.

Dadurch können beispielsweise Anomalien in einem medizinischen Röntgenbild detektiert und in weiterer Folge klassifiziert werden etc.

Erfindungsgemäß ist es ferner auch möglich, dass der technische erste Zustand und der technische zweite Zustand oder die technische erste Beschaffenheit und die technische zweite Beschaffenheit beispielsweise elektrische und/oder elektronische Qualitätseigenschaften technischer Vorrichtungen betreffen. Eine elektrische Qualitätseigenschaft kann beispielsweise eine Wicklungsqualität einer Spule eines Relais betreffen, eine elektronische Qualitätseigenschaft z.B. eine plankonforme oder nicht plankonforme Bestückung einer Platine mit elektronischen Bauteilen etc.

In dem Detektionsschritt 21 wird dem ersten Detektionsbilddatensatz, welchen das erste Detektionsergebnis betrifft, das erste Detektionsergebnis als erstes Detektionslabel zugeordnet, dem zweiten Detektionsbilddatensatz, welchen das zweite Detektionsergebnis betrifft, das zweite Detektionsergebnis als zweites Detektionslabel zugeordnet, dem dritten Detektionsbilddatensatz, welchen das dritte Detektionsergebnis betrifft, das dritte Detektionsergebnis als drittes Detektionslabel zugeordnet und dem vierten Detektionsbilddatensatz, welchen das vierten Detektionsergebnis betrifft, das vierte Detektionsergebnis als viertes Detektionslabel zugeordnet.

Wird in dem ersten Kontrollschritt 22 in einem Detektionsergebnis ein Detektionsfehler detektiert (z.B. der erste Detektionsfehler betreffend das erste Detektionsergebnis), so wird das dem entsprechenden Detektionsergebnis zugordnete Detektionslabel als ungültig deklariert (z.B. das erste Detektionslabel bei Vorliegen des ersten Detektionsfehlers).

Der Klassifikationsschritt 18, mittels welchem die technische erste Beschaffenheit und die technische zweite Beschaffenheit oder der technische erste Zustand und der technische zweite Zustand klassifiziert werden, wird mittels eines in der ersten Recheneinheit 1 implementierten ersten Klassifikationsmodells 26, wie es beispielhaft in Fig. 2 und Fig. 3 gezeigt ist, und eines in der zweiten Recheneinheit 2 implementierten zweiten Klassifikationsmodells 27, wie es beispielhaft in Fig. 2 und Fig. 3 dargestellt ist, durchgeführt.

Das erste Klassifikationsmodell 26 und das zweite Klassifikationsmodell 27 sind als Support-Vector-Maschinen ausgebildet, mit welchen eine Mehrzahl an Objekten über Hyperebenen in Klassen eingeteilt wird.

Das erste Klassifikationsmodell 26 und das zweite Klassifikationsmodell 27 werden zur Unterscheidung der technischen ersten Beschaffenheit von der technischen zweiten Beschaffenheit oder des technischen ersten Zustands von dem technischen zweiten Zustand auf Grundlage von Detektionsergebnissen des ersten Modells 4, des zweiten Modells 5, des vierten Modells 7 und des fünften Modells 8 in einem zweiten Modelltrainingsschritt 15 trainiert.

Zur Unterscheidung zwischen Kratzern und Durchrissen in Fahrzeugkarosserien wird das erste Klassifikationsmodell 26 auf Grundlage des ersten Detektionsergebnisses und des zweiten Detektionsergebnisses sowie weiteren mittels des ersten Modells 4 und des vierten Modells 7 gebildeten Detektionsergebnissen trainiert und wird das zweite Klassifikationsmodell 27 auf Grundlage des dritten Detektionsergebnisses und des vierten Detektionsergebnisses sowie weiteren mittels des zweiten Modells 5 und des fünften Modells 8 gebildeten Detektionsergebnissen trainiert.

Ein erster Trainingsvorgang des zweiten Modelltrainingsschritts 15 an dem ersten Klassifikationsmodell 26 wird zur Detektion anomaler oder fehlerhafter erster Trainingseingaben in das erste Klassifikationsmodell 26 betreffend das erste Detektionsergebnis, das zweite Detektionsergebnis sowie die weiteren mittels des ersten Modells 4 und des vierten Modells 7 gebildeten Detektionsergebnisse mittels des dritten Modells 6 auf Grundlage des ersten Kontroll-Detektionsergebnisses, des zweiten Kontroll-Detektionsergebnisses sowie weiterer Kontroll-Detektionsergebnisse betreffend die weiteren mittels des ersten Modells 4 und des vierten Modells 7 gebildeten Detektionsergebnisse überwacht. Detektionsergebnisse, welche ungültige Detektionslabels aufweisen, werden so in dem ersten Trainingsvorgang nicht berücksichtigt.

Ein zweiter Trainingsvorgang des zweiten Modelltrainingsschritts 15 an dem zweiten Klassifikationsmodell 27 wird zur Detektion anomaler oder fehlerhafter zweiter Trainingseingaben in das zweite Klassifikationsmodell 27 betreffend das dritte Detektionsergebnis, das vierte Detektionsergebnis sowie die weiteren mittels des zweiten Modells 5 und des fünften Modells 8 gebildeten Detektionsergebnisse mittels des dritten Modells 6 auf Grundlage des dritten Kontroll-Detektionsergebnisses, des vierten Kontroll-Detektionsergebnisses sowie weiterer Kontroll-Detektionsergebnisse betreffend die weiteren mittels des zweiten Modells 5 und des fünften Modells 8 gebildeten Detektionsergebnisse überwacht. Detektionsergebnisse, welche ungültige Detektionslabels aufweisen, werden so in dem zweiten Trainingsvorgang nicht berücksichtigt.

Erfindungsgemäß ist es auch möglich, dass Detektionsergebnisse, welche ungültige Detektionslabels aufweisen, in einem Fehlerdatenspeicher der ersten Recheneinheit 1, der zweiten Recheneinheit 2 oder/und der dritten Recheneinheit 3 gespeichert werden.

Auf Grundlage von Klassifikationstrainingsergebnissen aus dem zweiten Modelltrainingsschritt 15 an dem ersten Klassifikationsmodell 26 und an dem zweiten Klassifikationsmodell 27 wird ein föderales drittes Klassifikationsmodell 28 gebildet (zweiter Föderalisierungsschritt 17), von welchem eine erste Klassifikationsmodellinstanz 29 in der ersten Recheneinheit 1 gebildet wird und eine zweite Klassifikationsmodellinstanz 30 in der zweiten Recheneinheit 2 gebildet wird.

Das dritte Klassifikationsmodell 28 ist beispielhaft in Fig. 2 und Fig. 3 gezeigt, die erste Klassifikationsmodellinstanz 29 und die zweite Klassifikationsmodellinstanz 30 sind beispielhaft in Fig. 2 gezeigt.

Bei dem zweiten Föderalisierungsschritt 17 handelt es sich um einen Vorgang dezentralisierten föderalen maschinellen Lernens, bei welchem das erste Klassifikationsmodell 26 und das zweite Klassifikationsmodell 27 jeweils mit lokalen Klassifikationsdatensätzen trainiert werden, ohne dass Eingangsdaten für den zweiten Modelltrainingsschritt 15 ausgetauscht werden. Es werden vielmehr erste Klassifikationstrainingsergebnisse betreffend das erste Klassifikationsmodell 26 und zweite Klassifikationstrainingsergebnisse betreffend das zweite Klassifikationsmodell 27 in Form von aktualisierten Klassifikationsmodellparametern zwischen der ersten Recheneinheit 1 und der zweiten Recheneinheit 2 in regelmäßigen Intervallen ausgetauscht.

Sind das erste Klassifikationsmodell 26 und das zweite Klassifikationsmodell 27 trainiert und föderalisiert, so werden mittels ersten Klassifikationsmodells 26, des zweiten Klassifikationsmodells 27 und des dritten Klassifikationsmodells 28 in dem Klassifikationsschritt 18 Klassifizierungen durchgeführt. So würde beispielsweise in dem Klassifikationsschritt 18 der erste Bilddatensatz mittels des ersten Klassifikationsmodells 26 dahingehend bewertet werden, dass er einen Kratzer einer Fahrzeugkarosserie (eine technische erste Beschaffenheit) und keinen Durchriss in der Fahrzeugkarosserie (technische zweite Beschaffenheit) indiziert. Mittels des ersten Klassifikationsmodells 26 und des zweiten Klassifikationsmodells 27 kann also die technische erste Beschaffenheit von der technischen zweiten Beschaffenheit oder der technische erste Zustand von dem technischen zweiten Zustand unterschieden werden.

Mittels des dritten Klassifikationsmodells 28 werden Kontroll-Klassifikationsergebnisse gebildet, über welche von dem ersten Klassifikationsmodell 26 und dem zweiten Klassifikationsmodell 27 gebildete Klassifikationsergebnisse kontrolliert und/oder verbessert werden (zweiter Kontrollschritt 23).

Erfindungsgemäß ist es auch denkbar, dass das dritte Klassifikationsmodell 28 in der dritten Recheneinheit 3 gebildet wird. Hierbei werden die ersten Klassifikationstrainingsergebnisse und die zweiten Klassifikationstrainingsergebnisse von der ersten Recheneinheit 1 und der zweiten Recheneinheit 2 in die dritte Recheneinheit 3 übertragen. Die Kontroll-Klassifikationsergebnisse werden hierbei von der dritten Recheneinheit 3 in die erste Recheneinheit 1 und in die zweite Recheneinheit 2 übertragen.

Die dritte Recheneinheit 3 kann so, in einem alternativen, zentralisierten Ansatz föderalen Lernens, dazu genutzt werden, Lernschritte in der ersten Recheneinheit 1 und der zweiten Recheneinheit 2 zu koordinieren.

In Fig. 2 ist eine beispielhafte erste Ausführungsvariante eines erfindungsgemäßen Datenverarbeitungssystems mit einer ersten Recheneinheit 1 und einer zweiten Recheneinheit 2 schematisch dargestellt.

Die erste Recheneinheit 1 ist mittels einer ersten Signalleitung 9 signalübertragend mit der zweiten Recheneinheit 2 verbunden.

Das Datenverarbeitungssystem umfasst ein erstes Modell 4 künstlicher Intelligenz, ein zweites Modell 5 künstlicher Intelligenz, ein föderales drittes Modell 6 künstlicher Intelligenz, ein viertes Modell 7 künstlicher Intelligenz, ein fünftes Modell 8 künstlicher Intelligenz sowie ein erstes Klassifikationsmodell 26, ein zweites Klassifikationsmodell 27 und ein föderales drittes Klassifikationsmodell 28.

Das erste Modell 4 und das vierte Modell 7, eine erste Modellinstanz 19 des dritten Modells 6, das erste Klassifikationsmodell 26 sowie eine erste Klassifikationsmodellinstanz 29 des dritten Klassifikationsmodells 28 sind in der ersten Recheneinheit 1 implementiert.

Das zweite Modell 5 und das fünfte Modell 8, eine zweite Modellinstanz 20 des dritten Modells 6, das zweite Klassifikationsmodell 27 sowie eine zweite Klassifikationsmodellinstanz 30 des dritten Klassifikationsmodells 28 sind in der zweiten Recheneinheit 2 implementiert.

Zur Einspeisung von Daten aus externen Datenquellen in die erste Recheneinheit 1 und in die zweite Recheneinheit 2 ist mit der ersten Recheneinheit 1 eine zweite Signalleitung 10 und ist mit der zweiten Recheneinheit 2 dritte Signalleitung 11 verbunden.

Zur Ausgabe von Informationen und/oder Warnungen ist mit der ersten Recheneinheit 1 eine als erste Anzeige ausgebildete erste Ausgabeeinheit 24 verbunden und ist mit der zweiten Recheneinheit 2 eine als zweite Anzeige ausgebildete zweite Ausgabeeinheit 25 verbunden.

Die erste Recheneinheit 1, die zweite Recheneinheit 2, das erste Modell 4, das zweite Modell 5, das dritte Modell 6, das vierte Modell 7, das fünfte Modell 8, die erste Modellinstanz 19, die zweite Modellinstanz 20, das erste Klassifikationsmodell 26, das zweite Klassifikationsmodell 27, das dritte Klassifikationsmodell 28, die erste Klassifikationsmodellinstanz 29, die zweite Klassifikationsmodellinstanz 30, die erste Signalleitung 9, die zweite Signalleitung 10, die dritte Signalleitung 11, die erste Ausgabeeinheit 24 und die zweite Ausgabeeinheit 25 sind Mittel des Datenverarbeitungssystem zur Ausführung eines erfindungsgemäßen Verfahrens, wie es beispielhaft in Fig. 1 dargestellt ist.

Erfindungsgemäß ist es jedoch auch vorstellbar, dass die Mittel des Datenverarbeitungssystems zur Ausführung einer alternativen Variante eines erfindungsgemäßen Verfahrens beispielsweise nur die erste Recheneinheit 1, die zweite Recheneinheit 2, das erste Modell 4, das zweite Modell 5 und das dritte Modell 6 umfassen etc.

Fig. 3 zeigt eine beispielhafte zweite Ausführungsvariante eines erfindungsgemäßen Datenverarbeitungssystems in schematischer Darstellung.

Diese beispielhafte zweite Ausführungsvariante ähnelt jener beispielhaften ersten Ausführungsvariante eines erfindungsgemäßen Datenverarbeitungssystems, wie sie in Fig. 2 offenbart ist.

Es werden daher in Fig. 3 teilweise gleiche Bezugszeichen wie in Fig. 2 verwendet.

Im Unterschied zu Fig. 2 umfasst die beispielhafte zweite Ausführungsvariante eines erfindungsgemäßen Datenverarbeitungssystems gemäß Fig. 3 eine erste Recheneinheit 1, eine zweite Recheneinheit 2 und eine dritte Recheneinheit 3.

Das Datenverarbeitungssystem umfasst ein erstes Modell 4 künstlicher Intelligenz, ein zweites Modell 5 künstlicher Intelligenz, ein föderales drittes Modell 6 künstlicher Intelligenz, ein viertes Modell 7 künstlicher Intelligenz, ein fünftes Modell 8 künstlicher Intelligenz sowie ein erstes Klassifikationsmodell 26, ein zweites Klassifikationsmodell 27 und ein föderales drittes Klassifikationsmodell 28.

Das erste Modell 4, das vierte Modell 7 und das erste Klassifikationsmodell 26 sind in der ersten Recheneinheit 1 implementiert.

Das zweite Modell 5, das fünfte Modell 8 und das zweite Klassifikationsmodell 27 sind in der zweiten Recheneinheit 2 implementiert.

Das dritte Modell 6 und das dritte Klassifikationsmodell 28 sind in der dritten Recheneinheit 3 implementiert.

Die erste Recheneinheit 1 ist mit der zweiten Recheneinheit 2 über eine erste Signalleitung 9 signalübertragend verbunden. Zur Einspeisung von Daten aus externen Datenquellen in die erste Recheneinheit 1 und in die zweite Recheneinheit 2 ist mit der ersten Recheneinheit 1 eine zweite Signalleitung 10 und ist mit der zweiten Recheneinheit 2 eine dritte Signalleitung 11 verbunden.

Die dritte Recheneinheit 3 ist über eine vierte Signalleitung 12 mit der ersten Recheneinheit 1 und über eine fünfte Signalleitung 13 mit der zweiten Recheneinheit 2 verbunden.

Die erste Recheneinheit 1, die zweite Recheneinheit 2, die dritte Recheneinheit 3, das erste Modell 4, das zweite Modell 5, das dritte Modell 6, das vierte Modell 7, das fünfte Modell 8, das erste Klassifikationsmodell 26, das zweite Klassifikationsmodell 27, das dritte Klassifikationsmodell 28, die erste Signalleitung 9, die zweite Signalleitung 10, die dritte Signalleitung 11, die vierte Signalleitung 12 und die fünfte Signalleitung 13 sind Mittel des Datenverarbeitungssystem zur Ausführung eines erfindungsgemäßen Verfahrens, wie es beispielhaft in Fig. 1 dargestellt ist.

### Liste der Bezeichnungen

- 1: Erste Recheneinheit
- 2: Zweite Recheneinheit
- 3: Dritte Recheneinheit
- 4: Erstes Modell
- 5: Zweites Modell
- 6: Drittes Modell
- 7: Viertes Modell
- 8: Fünftes Modell
- 9: Erste Signalleitung
- 10: Zweite Signalleitung
- 11: Dritte Signalleitung
- 12: Vierte Signalleitung
- 13: Fünfte Signalleitung
- 14: Erster Modelltrainingsschritt
- 15: Zweiter Modelltrainingsschritt
- 16: Erster Föderalisierungsschritt
- 17: Zweiter Föderalisierungsschritt
- 18: Klassifikationsschritt
- 19: Erste Modellinstanz
- 20: Zweite Modellinstanz
- 21: Detektionsschritt
- 22: Erster Kontrollschritt
- 23: Zweiter Kontrollschritt
- 24: Erste Ausgabeeinheit
- 25: Zweite Ausgabeeinheit
- 26: Erstes Klassifikationsmodell
- 27: Zweites Klassifikationsmodell
- 28: Drittes Klassifikationsmodell
- 29: Erste Klassifikationsmodellinstanz
- 30: Zweite Klassifikationsmodellinstanz

## Patentansprüche

1. Computerimplementiertes Verfahren zur Detektion von technischen Zuständen oder technischen Beschaffenheiten, wobei zumindest ein in einer ersten Recheneinheit (1) eines Datenverarbeitungssystems implementiertes erstes Modell (4) künstlicher Intelligenz und ein in einer mit der ersten Recheneinheit (1) signalübertragend verbundenen zweiten Recheneinheit (2) des Datenverarbeitungssystems implementiertes zweites Modell (5) künstlicher Intelligenz auf Grundlage von technische Zustände oder technische Beschaffenheiten repräsentierenden Trainingsdaten trainiert werden, wobei in dem Datenverarbeitungssystem zumindest aus ersten Trainingsergebnissen betreffend das erste Modell (4) künstlicher Intelligenz und aus zweiten Trainingsergebnissen betreffend das zweite Modell (5) künstlicher Intelligenz ein föderales drittes Modell (6) künstlicher Intelligenz gebildet wird, **dadurch gekennzeichnet, dass** zumindest mittels des ersten Modells (4) künstlicher Intelligenz und mittels des dritten Modells (6) künstlicher Intelligenz zumindest ein technischer erster Zustand oder zumindest eine technische erste Beschaffenheit detektiert wird, wobei mittels des ersten Modells (4) künstlicher Intelligenz zumindest ein erstes Detektionsergebnis gebildet wird und mittels des dritten Modells (6) künstlicher Intelligenz zumindest ein erstes Kontroll-Detektionsergebnis gebildet wird, und wobei ein erster Detektionsfehler dann detektiert wird, wenn zumindest das erste Detektionsergebnis und das erste Kontroll-Detektionsergebnis einander widersprechen.

2. Computerimplementiertes Verfahren nach Anspruch 1, **dadurch gekennzeichnet, dass** zumindest der technische erste Zustand oder zumindest die technische erste Beschaffenheit eine mechanische, elektrische und/oder elektronische Qualitätseigenschaft zumindest einer technischen Vorrichtung betrifft, wobei die zumindest eine technische Vorrichtung zur Bildung zumindest des ersten Detektionsergebnisses und des ersten Kontroll-Detektionsergebnisses automatisiert inspiziert wird.

3. Computerimplementiertes Verfahren nach Anspruch 1 oder 2, **dadurch gekennzeichnet, dass** Daten betreffend zumindest den technischen ersten Zustand oder zumindest die technische erste Beschaffenheit in zumindest einem Signal codiert sind, welches zumindest ein Bild repräsentiert und welches zur Bildung zumindest des ersten Detektionsergebnisses und des ersten Kontroll-Detektionsergebnisses ausgewertet wird.

4. Computerimplementiertes Verfahren nach Anspruch 1 oder 2, **dadurch gekennzeichnet, dass** zumindest der technische erste Zustand oder zumindest die technische erste Beschaffenheit zumindest ein Zustand oder zumindest eine Beschaffenheit zumindest eines Signals ist, welches zumindest ein Bild repräsentiert und welches zur Bildung zumindest des ersten Detektionsergebnisses und des ersten Kontroll-Detektionsergebnisses ausgewertet wird.

5. Computerimplementiertes Verfahren nach einem der Ansprüche 1 bis 4, **dadurch gekennzeichnet, dass** einem Datensatz, welchen das erste Detektionsergebnis betrifft, das erste Detektionsergebnis als Label zugeordnet wird.

6. Computerimplementiertes Verfahren nach einem der Ansprüche 1 bis 5, **dadurch gekennzeichnet, dass** zumindest das erste Modell (4) künstlicher Intelligenz ein Autoencoder ist.

7. Computerimplementiertes Verfahren nach einem der Ansprüche 1 bis 6, **dadurch gekennzeichnet, dass** zumindest das erste Detektionsergebnis und das erste Kontroll-Detektionsergebnis zur visuellen Qualitätskontrolle zumindest einer technischen Vorrichtung gebildet werden.

8. Computerimplementiertes Verfahren nach einem der Ansprüche 1 bis 7, **dadurch gekennzeichnet, dass** mittels zumindest eines in der ersten Recheneinheit (1) implementierten ersten Klassifikationsmodells (26) zumindest der technische erste Zustand oder zumindest die technische erste Beschaffenheit klassifiziert wird.

9. Computerimplementiertes Verfahren nach Anspruch 8, **dadurch gekennzeichnet, dass** in dem Datenverarbeitungssystem auf Grundlage zumindest des ersten Klassifikationsmodells (26) und eines in der zweiten Recheneinheit (2) implementierten zweiten Klassifikationsmodells (27) ein föderales drittes Klassifikationsmodell (28) gebildet wird, von welchem eine erste Klassifikationsmodellinstanz (29) in der ersten Recheneinheit (1) gebildet wird und eine zweite Klassifikationsmodellinstanz (30) in der zweiten Recheneinheit (2) gebildet wird.

10. Computerimplementiertes Verfahren nach Anspruch 8 oder 9, **dadurch gekennzeichnet, dass** in einer mit der ersten Recheneinheit (1) und der zweiten Recheneinheit (2) signalübertragend verbundenen dritten Recheneinheit (3) des Datenverarbeitungssystems auf Grundlage zumindest des ersten Klassifikationsmodells (26) und eines in der zweiten Recheneinheit (2) implementierten zweiten Klassifikationsmodells (27) ein föderales drittes Klassifikationsmodell (28) gebildet wird.

11. Computerimplementiertes Verfahren nach einem der Ansprüche 8 bis 10, **dadurch gekennzeichnet, dass** ein in der ersten Recheneinheit (1) implementiertes viertes Modell (7) künstlicher Intelligenz und ein in der zweiten Recheneinheit (2) implementiertes fünftes Modell (8) künstlicher Intelligenz auf Grundlage von technische Zustände oder technische Beschaffenheiten repräsentierenden Trainingsdaten trainiert werden, wobei das föderale dritte Modell (6) künstlicher Intelligenz aus den ersten Trainingsergebnissen und den zweiten Trainingsergebnissen sowie aus dritten Trainingsergebnissen betreffend das vierte Modell (7) künstlicher Intelligenz und vierten Trainingsergebnissen betreffend das fünfte Modell (8) künstlicher Intelligenz gebildet wird, wobei zumindest mittels des vierten Modells (7) künstlicher Intelligenz und mittels des dritten Modells (6) künstlicher Intelligenz zumindest ein technischer zweiter Zustand oder zumindest eine technische zweite Beschaffenheit detektiert wird, wobei mittels des vierten Modells (7) künstlicher Intelligenz zumindest ein zweites Detektionsergebnis gebildet wird und mittels des dritten Modells (6) künstlicher Intelligenz zumindest ein zweites Kontroll-Detektionsergebnis gebildet wird, und wobei ein zweiter Detektionsfehler dann detektiert wird, wenn zumindest das zweite Detektionsergebnis und das zweite Kontroll-Detektionsergebnis einander widersprechen.

12. Computerimplementiertes Verfahren nach Anspruch 11, **dadurch gekennzeichnet, dass** zumindest das erste Klassifikationsmodell (26) zur Unterscheidung zumindest des technischen ersten Zustands von dem technischen zweiten Zustand oder zumindest der technischen ersten Beschaffenheit von der technischen zweiten Beschaffenheit auf Grundlage zumindest des ersten Detektionsergebnisses und des zweiten Detektionsergebnisses trainiert wird, wobei ein erster Trainingsvorgang des ersten Klassifikationsmodells (26) zur Detektion anomaler oder fehlerhafter erster Trainingseingaben in das erste Klassifikationsmodell (26) betreffend zumindest das erste Detektionsergebnis und das zweite Detektionsergebnis mittels des dritten Modells (6) künstlicher Intelligenz auf Grundlage zumindest des ersten Kontroll-Detektionsergebnisses und des zweiten Kontroll-Detektionsergebnisses überwacht wird.

13. Computerimplementiertes Verfahren nach Anspruch 9 oder 10 und Anspruch 11 oder 12, **dadurch gekennzeichnet, dass** das zweite Klassifikationsmodell (27) auf Grundlage zumindest eines mittels des zweiten Modells (5) künstlicher Intelligenz gebildeten dritten Detektionsergebnisses betreffend zumindest den technischen ersten Zustand oder zumindest die technische erste Beschaffenheit und eines mittels des fünften Modells (8) künstlicher Intelligenz gebildeten vierten Detektionsergebnisses betreffend zumindest den technischen zweiten Zustand oder zumindest die technische zweite, Beschaffenheit trainiert wird, wobei ein zweiter Trainingsvorgang des zweiten Klassifikationsmodells (27) zur Detektion anomaler oder fehlerhafter zweiter Trainingseingaben in das zweite Klassifikationsmodell (27) betreffend zumindest das dritte Detektionsergebnis und das vierte Detektionsergebnis mittels des dritten Modells (6) künstlicher Intelligenz auf Grundlage zumindest eines zur Kontrolle des dritten Detektionsergebnisses mittels des dritten Modells (6) künstlicher Intelligenz gebildeten dritten Kontroll-Detektionsergebnisses und eines zur Kontrolle des vierten Detektionsergebnisses mittels des dritten Modells (6) künstlicher Intelligenz gebildeten vierten Kontroll-Detektionsergebnisses überwacht wird.

14. Computerimplementiertes Verfahren nach einem der Ansprüche 1 bis 13, **dadurch gekennzeichnet, dass** eine erste Modellinstanz (19) des dritten Modells (6) künstlicher Intelligenz in der ersten Recheneinheit (1) gebildet wird und eine zweite Modellinstanz (20) des dritten Modells (6) künstlicher Intelligenz in der zweiten Recheneinheit (2) gebildet wird, wobei die zweiten Trainingsergebnisse von der zweiten Recheneinheit (2) in die erste Recheneinheit (1) übertragen werden.

15. Computerimplementiertes Verfahren nach einem der Ansprüche 1 bis 14, **dadurch gekennzeichnet, dass** das dritte Modell (6) künstlicher Intelligenz in einer mit der ersten Recheneinheit (1) und der zweiten Recheneinheit (2) signalübertragend verbundenen dritten Recheneinheit (3) des Datenverarbeitungssystems gebildet wird, wobei die ersten Trainingsergebnisse aus der ersten Recheneinheit (1) und die zweiten Trainingsergebnisse aus der zweiten Recheneinheit (2) in die dritte Recheneinheit (3) übertragen werden und zumindest das erste Kontroll-Detektionsergebnis von der dritten Recheneinheit (3) in die erste Recheneinheit (1) übertragen wird.

16. Datenverarbeitungssystem, umfassend Mittel zur Ausführung des Verfahrens nach einem der Ansprüche 1 bis 15.
